**Europäisches Patentamt**

**European Patent Office**

**Office européen des brevets**

(19)

(11) **EP 1 109 031 A1**

(12) **EUROPÄISCHE PATENTANMELDUNG**

(43) Veröffentlichungstag:
**20.06.2001 Patentblatt 2001/25**

(51) Int Cl.[7]: **G01S 5/02**, H04Q 7/38

(21) Anmeldenummer: **99811139.7**

(22) Anmeldetag: **10.12.1999**

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(71) Anmelder: **Ascom Systec AG**
**5506 Mägenwil (CH)**

(72) Erfinder: **Liebendörfer, Matthias**
**CH-4056 Basel (CH)**

(74) Vertreter: **Roshardt, Werner Alfred, Dipl.-Phys.**
**Keller & Partner**
**Patentanwälte AG**
**Schmiedenplatz 5**
**Postfach**
**3000 Bern 7 (CH)**

(54) **Verfahren und Einrichtung zum Lokalisieren eines mobilen Terminals**

(57) Ein mobiles Terminal (T) ist in einem Kommunikationssystem eingebunden und tauscht Funksignale mit mindestens einer Basisstation (B1, B2, B3, B4) aus. Es bewegt sich frei innerhalb eines vorgegebenen Überwachungsbereiches (1, 2, 3, 4). Zur Lokalisierung des Terminals (T) werden mindestens zwei (vorzugsweise mehrere) verschiedene Positionsschätzungen gemacht. Jede dieser Positionsschätzungen kann zusätzlich mit einem Wahrscheinlichkeitswert versehen werden. Als aktuelle Position wird diejenige bestimmt, die unter Berücksichtigung der in mindestens einem vergangenen Zeitpunkt (d.h. einem früheren Überwachungszyklus) ermittelten Positionsschätzung einen Fortbewegungspfad größter oder zumindest erhöhter Wahrscheinlichkeit ergibt. Allgemein gesagt, wird die aktuelle Position nicht isoliert sondern vor dem Hintergrund einer zeitlichen Verkettung hoher Wahrscheinlichkeit ermittelt. Dabei kann ein Viterbi-Algorithmus zur Anwendung kommen.

Fig. 1

**EP 1 109 031 A1**

## Beschreibung

### Technisches Gebiet

Die Erfindung betrifft ein Verfahren zum Bestimmen einer aktuellen Position eines in einem Kommunikationssystem eingebundenen mobilen Terminals innerhalb eines vorgegebenen Überwachungsbereiches, wobei in einem Überwachungszyklus Funksignale mit mindestens einer Basisstation ausgetauscht werden. Weiter bezieht sich die Erfindung auf eine Einrichtung zur Durchführung des Verfahrens, auf einen Rechner mit einem Programm zur Lokalisierung eines in einem Kommunikationssystem eingebundenen mobilen Terminals und auf ein mobiles Terminal selbst.

### Stand der Technik

Es ist bekannt, für die Lokalisierung von Fahrzeugen aller Art das GPS (Global Positioning System) einzusetzen. Die Genauigkeit der Positionsbestimmung ist jedoch beschränkt, wenn man sich allein auf die vom GPS gelieferten Signale verläßt. Bei Landfahrzeugen werden daher regelmäßig auch Wegsensoren benötigt. Für die Positionsbestimmung innerhalb eines Gebäudes kann GPS nicht eingesetzt werden. Es sind deshalb schon verschiedene Lokalisierungssysteme vorgeschlagen worden, welche auf die innerhalb eines drahtlosen Kommunikationssystems verfügbaren Informationen zurückgreifen.

Aus der JP 53-08909 ist ein Kommunikationssystem bekannt, welches die Lokalisierung der Teilnehmer ermöglicht. Zu diesem Zweck wird das Gebiet in Zonen aufgeteilt, wobei für jede Zone ein Empfänger an der Decke montiert ist. Die Empfänger messen die Leistung bzw. Amplitude der empfangenen Signale und können aufgrund der individuellen Signale der mobilen Sender feststellen, wo sich die entsprechende Person aufhält.

Ein weiteres System ist aus der JP 08/157 184 bekannt. Bei diesem sind in einem mobilen Terminal die Identifikationscodes und die Empfangsstärken der verschiedenen Basisstationen abgespeichert. Wenn eine Zentrale einen Aufruf zur Lokalisierung des mobilen Terminals sendet, überträgt das Terminal die genannten abgespeicherten Daten an die Zentrale, welche dann ihrerseits die Position des Terminals berechnen kann.

Weitere Systeme sind z.B. in den Publikationen GB 2.312.801, US 5,543,797 und WO99/19742 beschrieben. Allen ist gemeinsam, daß die Empfangsqualität für die Bestimmung des Abstands zu einem Sender verwendet wird und daß für die Lokalisierung mehrere Signalübertragungswege ausgewertet werden. Es zeigt sich nun, daß die bekannten Lokalisierungsverfahren hinsichtlich ihrer Präzision verhältnismäßig anfällig sind auf Störungen der Signalübertragung.

### Darstellung der Erfindung

Aufgabe der Erfindung ist es, ein Verfahren der eingangs genannten Art anzugeben, das insbesondere innerhalb von Gebäuden eine zuverlässigere und präzisere Ortsbestimmung ermöglicht.

Die Lösung der Aufgabe ist durch die Merkmale des Anspruchs 1 definiert. Gemäss der Erfindung werden mindestens zwei (vorzugsweise mehrere) verschiedene Positionsschätzungen gemacht. Jede dieser Positionsschätzungen kann zusätzlich mit einem Wahrscheinlichkeitswert versehen werden. Als aktuelle Position wird diejenige bestimmt, die unter Berücksichtigung der in mindestens einem vergangenen Zeitpunkt (d.h. einem früheren Überwachungszyklus) ermittelten Positionsschätzung einen Fortbewegungspfad größter oder zumindest erhöhter Wahrscheinlichkeit ergibt. Allgemein gesagt, wird die aktuelle Position nicht isoliert, sondern vor dem Hintergrund einer zeitlichen Verkettung hoher Wahrscheinlichkeit ermittelt.

Es werden also nicht nur einzelne Positionen des mobilen Terminals beobachtet und bestmöglich ausgemessen, sondern mögliche Fortbewegungspfade berechnet und wahrscheinlichkeitsmäßig selektioniert. Dahinter steht der Gedanke, daß in Realität die Bewegung des mobilen Terminals nicht beliebig sein kann. Beispielsweise kann davon ausgegangen werden, daß die Fortbewegungsgeschwindigkeit beschränkt ist oder daß das Terminal (sei es von einem Benutzer getragen oder auf einem fahrbaren bzw. beweglichen Gerät bzw. Gegenstand befestigt) eine Kontinuität in der Fortbewegungsart hat (d. h. er springt nicht hin und her). Weiter kann berücksichtigt werden, daß in einem Gebäude durch Wände, Treppen etc. gewisse physikalische Bedingungen geschaffen sind, die einen unmittelbaren Übergang von einem bestimmten Punkt A zu einem ausgewählten Punkt B verunmöglichen. Diese Bedingungen werden gemäss der Erfindung berücksichtigt, um einen "sinnvollen" bzw. wahrscheinlichen Fortbewegungspfad zu ermitteln.

Typischerweise werden die Positionsschätzungen in regelmäßigen Zeitabständen gemacht. Bei jedem Schätzzyklus sollen sich im Rahmen der Erfindung mehrere mögliche (geschätzte) Positionen ergeben, die in einem vorgegebenen Toleranzbereich mit den gemessenen Parametern verträglich sind. (Die Schätzung der Position wird in der Regel auf einem Verfahren beruhen, das keine absolute Genauigkeit liefert. Der Messfehler, dessen Größe vom tatsächlichen Aufenthaltsort des mobilen Terminals abhängen kann, kann z.B. als Grundlage dafür dienen, daß in einem Ortsbereich automatisch mehrere verschiedene Positionsschätzungen erzeugt werden.) Indem jede dieser möglichen Positionen mit dem bisherigen Fortbewegungspfad (d.h. mit dem Fortbewegungspfad bis zum vorhergehenden Schätzzyklus) kombiniert wird und eine entsprechende Gesamtwahrscheinlichkeit ermittelt wird, kann als aktuelle Position diejenige gewählt werden, welche die größte Gesamtwahrscheinlichkeit hat. Als bevorzugter Algorithmus zur Ermittlung des Pfades größter Wahrscheinlichkeit wird ein Viterbi-Algorithmus verwendet.

Es sind auch andere Optimierungsmethoden denkbar. Es können z.B. die Messwerte mehrerer Überwachungszyklen in einem Block zusammengefasst und ausgewertet werden, wobei innerhalb des als abgeschlossen betrachteten Blocks der Fortbewegungspfad grösster Wahrscheinlichkeit berechnet wird. In diesem Zusammenhang ist z.B. auf den sogenannten "Annealing Algorithm" hinzuweisen (vgl. z.B. W.H. Press, S.A. Teukolsky, W.T. Vetterling, P.F. Flannery, "Numerical Recipes, The Art of Scientific Computing", Second Edition, Cambridge University Press 1992, p. 436-447).

Als Meßwert zur Ermittlung der Positionsschätzung kann die Verbindungsqualität verwendet werden. Diese kann sich aus der Messung der Signalstärke des Empfangssignals, aus der Laufzeit zwischen Basisstationen und Terminal ("Leistungsverzögerungsprofil"), aus der aktuellen Zugehörigkeit zu einer bestimmten Funkzelle des Kommunikationssystems, aus der Fehlerrate der übertragenen Daten, aus dem Signal-Rausch-Abstand (engl. Signal to Noise Ratio = SNR) oder anderen aus der Nachrichtentechnik bekannten Größen ergeben. Selbstverständlich können auch mehrere solche Größen in Kombination miteinander die Verbindungsqualität definieren, sei es indem sie rechnerisch zu einem skalaren Wert verarbeitet oder daß sie zu einem Vektor zusammengestellt werden.

Die Verbindungsqualität kann am umfassendsten durch die Kanalstoßantwort und die Streufunktion des jeweiligen Übertragungskanals definiert werden. Weil dies in vielen Fällen rechnerisch sehr aufwendig sein kann, kann auch auf die zuvor genannten abgeleiteten Größen (Feldstärke, mittlere Laufzeit, Laufzeitverzögerungsprofil, Fehlerrate etc.) zurückgegriffen werden, welche mehr oder weniger genau Aufschluß über den Übertragungskanal geben. Der Übertragungskanal kann auch in an sich bekannter Weise ausgemessen werden, indem ein Signal mit einer Trainingssequenz gesendet wird. Aus der Nachrichtentechnik sind Verfahren bekannt, um auf diese Weise mit einem Equalizer die Übertragungsfunktion zu finden, welche die Trainingssequenz unverzerrt wiedergibt.

Die Verbindungsqualität von benachbarten Referenz-Positionen muss natürlich unterscheidbar sein. Für Parameter wie z.B. Kanalstossantwort (engl. channel impulse response) oder Interferenzpegel dürfte dies zutreffen, wenn die Referenz-Positionen um ein Mehrfaches einer Wellenlänge des Kommunikationssignals beabstandet sind. Das heisst, schon aus der Verbindung zu einer einzigen Basisstation lassen sich lokalisierungswesentliche Informationen gewinnen. In vielen Fällen ist es von Vorteil, wenn die Verbindungsqualität zu mehreren Basisstationen ausgemessen wird.

Für die Positionsschätzung wird die gemessene Verbindungsqualität mit einer Mehrzahl (>1) von Referenz-Verbindungsqualitäten verglichen. Jede Referenz-Verbindungsqualität ist dabei einer anderen Referenz-Position zugeordnet. Jede Positionsschätzung hat eine bestimmte Wahrscheinlichkeit.

Beim Vergleichen der Referenz-Verbindungsqualität mit der gemessenen Verbindungsqualität wird eine Distanzbestimmungsfunktion eingesetzt (d. h. eine Funktion, deren Wertebereich kontinuierlich oder sprunghaft mit den eingegebenen Daten ändert). Eine solche Distanzbestimmungsfunktion soll die Ähnlichkeit zweier Verbindungsqualitäten zeigen und kann z.B. auf dem Prinzip des Euklidischen Abstands der Vektoren beruhen (ev. kombiniert mit einer Schwelle).

Im allgemeinen Fall handelt es sich bei der Verbindungsqualität um einen Vektor. Die Komponenten dieses Vektors können z.B. durch die Fehlerrate, die Signalstärke, das SNR etc. gebildet sein. Der Euklidische Abstand berechnet sich in diesem Fall - wie allgemein bekannt - aus der Summe der quadrierten Differenzen der einzelnen Komponenten. Ist die Verbindungsqualität ein skalarer Wert, kann als Distanz der Betrag der Differenz zwischen der gemessenen und der als Referenz vorgegebenen Verbindungsqualität verwendet werden.

In einer Initialisierungsphase werden im gesamten Überwachungsbereich die Referenz-Positionen festgelegt. Ferner wird für jede Referenz-Position eine Referenz-Verbindungsqualität festgelegt. Dies kann messtechnisch oder rechnerisch erfolgen. Die Referenz-Positionen brauchen dabei nicht in regelmäßigen Abständen angeordnet zu sein. An Orten, wo sich entweder nicht so viele Benutzer aufhalten und wo die genaue Positions- Bestimmung nicht sehr wichtig ist, können die Referenz-Positionen einen größeren gegenseitigen Abstand haben als an Orten, wo es auf den exakten Aufenthaltsort des Benutzers/Terminals ankommt. Ferner kann es sinnvoll sein, bestimmte Orte (wie z.B. einen Türeingang, eine Lifttür) systematisch mit einer Referenz-Position auszustatten, um die Ermittlungen des wahrscheinlichsten Pfades zu erleichtern.

Ebenfalls kann in der Initialisierungsphase für jedes Paar von Referenz-Positionen eine der vorhandenen Topologie des Überwachungsbereiches entsprechende Übergangswahrscheinlichkeit zugeordnet werden. In der Regel werden die Dichte und Verteilung der Referenz-Positionen einerseits und die Abstände der Messzyklen andererseits derart aufeinander abgestimmt, daß sich der Benutzer zwischen zwei Messzyklen im Normalfall nur gerade etwa zur "nächsten" oder "übernächsten" Referenz-Position fortbewegen kann. Aufgrund dieser Annahme und der Kenntnis der örtlichen Gegebenheiten (Topologie) kann z.B. festgelegt werden, daß die Wahrscheinlichkeit sehr klein oder sogar = 0 ist, daß sich der Benutzer z.B. von einer Referenz-Position A auf der einen Seite einer Wand direkt zu einer Referenz-Position B auf der anderen Seite derselben Wand bewegt.

Bei größeren Überwachungsbereichen kann es von Vorteil sein, wenn die Übergangswahrscheinlichkeiten während des Lokalisierungszyklus nur beschränkt auf die interessierende Menge von Referenz-Positionen (z.B. festgelegt durch den "Referenzpositionenraum" oder die umliegenden Referenz-Positionen) berechnet wird. Auf diese Weise kann der Speicherbedarf minimiert werden. Allgemein gesagt geht es also einfach darum, daß - vor der Anwendung des Viterbi-Algorithmus - zumindest für diejenigen Referenz-Positionen, welche bei der Bestimmung der aktuellen Position des Terminals grundsätzlich in Frage kommen, eine Übergangswahrscheinlichkeit mit umliegenden Referenz-Positionen ermittelt wird.

Das Terminal kann z.B. ein Handfunktelefon sein, sei es ein Handy oder ein Schnurlostelefon. (Beide genannten Ausführungsarten können auch in einem Gerät vereinigt sein.) Bei einem Schnurlostelefon kann davon ausgegangen werden, dass der Handapparat zu irgendeinem Zeitpunkt auf der ortsfesten Basisstation (Tisch-Station) aufliegt (um beispielsweise aufgeladen zu werden). Dies kann nun im Rahmen der Erfindung dazu genutzt werden, eine zuverlässige Startposition für die nachfolgende Pfadbestimmung zu erzeugen. Durch den elektrischen Kontakt zur Ladestation weiß der Handapparat bzw. die Basisstation, in der Nähe welcher Referenz-Positionen sich das mobile Terminal befindet. Es ist natürlich nicht ausgeschlossen, daß der Ort der Basisstation nicht einer bestimmten Referenz-Position zugeordnet ist bzw. werden kann und daß infolgedessen mehrere mögliche Startpositionen ermittelt werden.

Fehlt es an einem solchen Gerät zur Festlegung der Startposition (Docking-Station), ist es ohne weiteres möglich, irgendwelche Referenz-Positionen als Startpositionen festzulegen. Im Verlauf der Zeit wird das erfindungsgemäße Pfadbestimmungsverfahren automatisch denjenigen Pfad ermitteln, dessen Start-Referenz-Position mit großer Wahrscheinlichkeit der "richtigen" Ausgangsposition entspricht. (Mit einem Viterbi-Algorithmus beispielsweise werden unwahrscheinliche Pfade fallengelassen.)

Vorzugsweise wird die aktuelle Position des Terminals durch eine Mittelung der mindestens zwei wahrscheinlichsten Referenz-Positionen bestimmt. Mit anderen Worten: In jedem Messzyklus werden zunächst z.B. die drei Referenz-Positionen größter Wahrscheinlichkeit ermittelt, um dann den "geographischen" Mittelwert bzw. Schwerpunkt zu berechnen und als aktuelle Position auszugeben. Bei der Mittelung können die Beiträge der verschiedenen Fortbewegungspfade direkt mit den entsprechenden Wahrscheinlichkeiten gewichtet werden. Es ist nicht zwingend, die Referenz-Position grösster Wahrscheinlichkeit als aktuelle Position auszuwählen. Jedenfalls ist es aber sinnvoll, diejenigen Referenz-Positionen innerhalb der beschränkten Menge der als möglich zugelassenen Positionen zu berücksichtigen, die innerhalb der genannten Menge eine gegenüber anderen Positionen erhöhte Wahrscheinlichkeit haben.

Die aktuelle Position des Terminals kann auch auf andere Weise ermittelt werden. Beispielsweise könnte der Erwartungswert aus den verschiedenen Referenz-Positionen und deren Wahrscheinlichkeit (bzw. Zuverlässigkeit) berechnet werden.Die Initialisierungsphase ist relativ aufwendig. Sie ist zumindest dann erforderlich, wenn das System installiert wird. Im Normalfall brauchen die Referenz-Positionen und die Übergangswahrscheinlichkeiten während der Lebensdauer des Systems nicht geändert zu werden. Damit die Qualität der Positionsbestimmung auch bei einer Änderung der Topologie (Aufteilung eines großen Raums in zwei oder mehr kleinere Räume; dauerhaftes Schließen einer Türe zwischen zwei benachbarten Räumen; Entfernen einer Trennwand zwischen zwei Räumen, neue Möbel bzw. Ummöblierung) nicht leidet, kann eine automatische Adaption der Verbindungsqualität implementiert sein. Zu diesem Zweck führt das System Buch über die Fortbewegungspfade der Terminals sowie die gemessenen Werte der Verbindungsqualität und paßt die der Referenz-Position zugeordneten Verbindungsqualität dort an, wo eine statistisch relevante Diskrepanz zwischen der beim Vergleich als verhältnismäßig hoch festgestellten Distanz der gemessenen Verbindungsqualität mit der Referenz-Verbindungsqualität festgestellt wird, wo aber aufgrund der (zumeist im nachhinein) ermittelten Gesamtwahrscheinlichkeit der verschiedenen möglichen Fortbewegungspfade trotzdem ein Durchgang durch die untersuchte Referenz-Position als wahrscheinlich festgestellt wird.

Die Gangbarkeit (= Übergangswahrscheinlichkeit) kann sich unter Umständen zeitabhängig ändern. Z.B. kann sich ein Terminal nur dann durch einen Durchgang bewegen, wenn die zugehörige Türe offen ist. Diesem Umstand könnte dadurch Rechnung getragen werden, daß das Gebäude an gewissen Stellen mit Sensoren ausgerüstet ist, welche die aktuelle Gangbarkeit eines Durchgangs oder dergleichen feststellen und dem Lokalisierungssystem übermitteln.

Die Anpassung der Verbindungsqualität kann z.B. dann vorgenommen werden, wenn die Distanz $D(Q(x),Q(P(I))$ zwischen der vom Terminal gemessenen Verbindungsqualität $Q(x)$ und der Referenz-Verbindungsqualität $Q(P(I))$ an der Referenz-Position $P(I)$ einen bestimmten Wert nie unterscheidet und an der fraglichen Referenz-Position immer etwa gleich ist.

Die Erfindung eignet sich insbesondere zur Anwendung bei einem Mobilfunksystem (sei es indoor oder outdoor). Ein solches umfaßt eine Mehrzahl von Basisstationen und von mobilen Terminals (Handfunktelefone) zum Telefonieren und/oder Übertragen von Daten. In Bezug auf den gewünschten Überwachungsbereich sind die Basisstationen vorzugsweise so angeordnet, daß an jedem Ort des Überwachungsbereichs mindestens zwei, insbesondere mindestens drei Basisstationen empfangen werden können. Durch Auswertung der zu jeder Basisstation bestehenden Verbindungsqualität kann entsprechend dem Erfindungsprinzip die aktuelle Position ermittelt werden.

Das Terminal kann die unterschiedlichste Funktion und Ausgestaltung haben. Zum einen kann es der Handapparat eines Schnurlostelefons bzw. Handfunktelefons sein, zum anderen sind insbesondere kommunikationsfähige Daten-Terminals von Interesse. Zu erwähnen sind Laptop-Computer, kommunikationsfähige mobile Dateneingabegeräte z.B. für die Aufnahme von Lagerbeständen, Uhren mit integrierten Pagern, an Robotern oder sonstigen Gegenständen befestigbare Lokalisierungsterminals etc.. Als Terminal kann im Rahmen der Erfindung auch ein kleiner Pager dienen. Es ist also keineswegs erforderlich, daß das Terminal für die Sprachübertragung ausgebildet ist. Es genügt, wenn die Signale der Basisstationen empfangen werden können und wenn selbst gewisse Daten an die Basisstationen gesendet werden können.

Gemäß einer vorteilhaften Ausführungsform hat das Kommunikationssystem mindestens eine Docking-Station, bei welcher die aktuelle Position des Terminals eindeutig bestimmt werden kann. Die Docking-Station kann z.B. die bereits erwähnte Tisch-Station eines Schnurlostelefons sein. Wird der Terminal zur Docking-Station gebracht, kann das erfindungsgemäße Positionsbestimmungssystem eine (neue) Startposition festlegen. Die Dokking-Station kann z.B. kombiniert werden mit einer elektronischen Zutrittkontrolle. Begibt sich also ein Benutzer in einen Raum, an dessen Eingang er sich identifizieren muß, um Zutritt zu erhalten, kann das Positionsbestimmungssystem die Positionsschätzung durch die Vorgabe der von der Docking-Station gelieferten Position ersetzen.

Die Bestimmung der aktuellen Position kann im mobilen Terminal selbst erfolgen. Das heißt, das Terminal misst die Verbindungsqualität zu den einzelnen Basisstationen, führt die Vergleiche zu den Referenz-Positionen durch und berechnet den aktuellen Aufenthaltsort aufgrund des Fortbewegungspfades größter Wahrscheinlichkeit. Falls zur Bestimmung der Verbindungsqualität Meßwerte oder Parameter benötigt werden, die in erster Linie seitens der Basisstation vorhanden sind, gibt es zwei Möglichkeiten: Entweder übermittelt jede Basisstation standardmäßig gewisse Meßwerte oder das Terminal fragt die Meßwerte von den Basisstationen ab.

Wenn nun der Benutzer einen bestimmten Dienst des Systems beanspruchen will, für welchen das System seine aktuelle Position kennen muß, dann kann das Terminal von selbst oder auf Anfrage des Systems die aktuelle Position übertragen (z.B. als Koordinaten oder als Angabe der Kennung der nächstliegenden vorgegebenen Referenz-Position).

Die Lokalisierungseinheit kann auch in einem am Kommunikationssystem angeschlossenen oder in diesem integrierten ortsfesten Rechner mittels Software verwirklicht sein.

Aus der nachfolgenden Detailbeschreibung und der Gesamtheit der Patentansprüche ergeben sich weitere vorteilhafte Ausführungsformen und Merkmalskombinationen der Erfindung.

**Kurze Beschreibung der Zeichnungen**

Die zur Erläuterung des Ausführungsbeispiels verwendeten Zeichnungen zeigen:

Fig. 1     eine schematische Darstellung eines Überwachungsbereiches mit einer Mehrzahl von Referenz-Positionen;

Fig. 2     eine schematische Darstellung des Verfahrensablaufes.

Grundsätzlich sind in den Figuren gleiche Teile mit gleichen Bezugszeichen versehen.

**Wege zur Ausführung der Erfindung**

Im nachfolgenden Ausführungsbeispiel wird davon ausgegangen, daß die Erfindung in einem drahtlosen Kommunikationssystem implementiert wird. Vorzugsweise handelt es sich um ein Kommunikationssystem in Gebäuden. Bei Bedarf kann zum Beispiel auch ein offenes Werksgelände einbezogen sein. Das System hat mehrere Basisstationen, welche das vorgegebene Gebiet versorgen, so daß trotz der beschränkten Funk-Reichweite ein ausreichend großes Gebiet abgedeckt werden kann und mit der zellenmäßigen Aufteilung die erforderliche System-Kapazität erreicht wird.

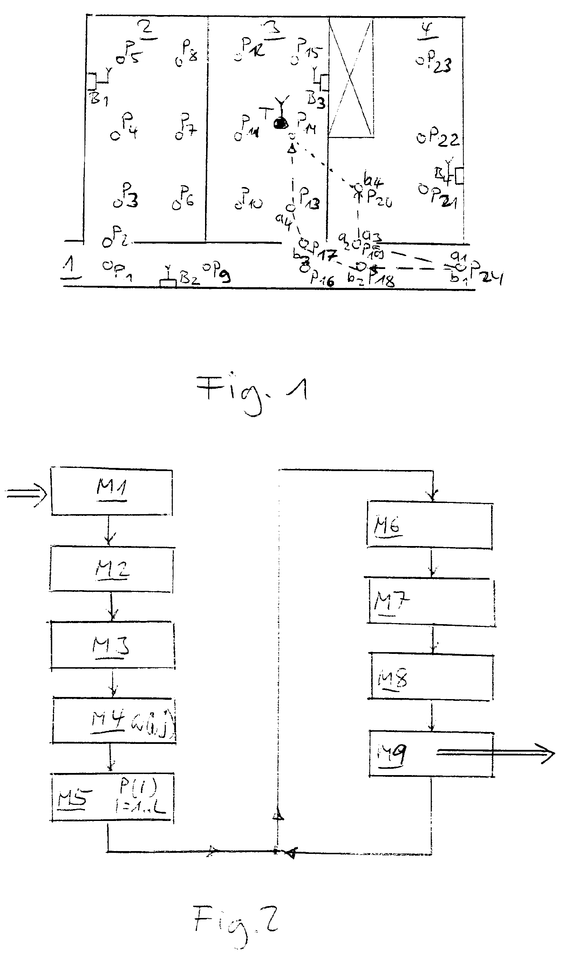

Fig. 1 zeigt beispielhaft einen Überwachungsbereich, der aus einem Gang 1 und drei Räumen 2, 3, 4 besteht. Im Gang 1 und in jedem Raum 2, 3, 4 ist eine Basisstation B1, B2, B3, B4 installiert. Die Sendeleistung der Basisstationen B1, B2, B3, B4 ist so festgelegt, dass jede nicht nur den eigenen Raum, sondern auch einen benachbarten abdeckt. Die Basisstation B2 beispielsweise kann also nicht nur im Raum 2, sondern auch im Raum 3 und im Gang empfangen werden.

Bewegt sich ein Teilnehmer mit einem mobilen Terminal T durch das Überwachungsgebiet, so wird von Zeit zu Zeit ein Wechsel der Verbindung von einer Basisstation (z.B. B4) zur anderen (z.B. B3) erforderlich. Damit dieses Handover (auch Hand-off genannt) möglichst reibungslos ausgeführt werden kann, prüft das Kommunikationssystem wiederholt die Verbindungen zu verschiedenen Basisstationen, welche am Aufenthaltsort des Terminals empfangen werden können. Die bei diesem an sich bekannten Prozeß anfallenden Daten enthalten Informationen, welche mit dem aktuellen Aufenthaltsort des Terminals und der für die Kommunikation (Datenübertragung etc.) benutzten Basisstation korreliert sind.

Gemäß der Erfindung wird nun der Aufenthaltsort des Teilnehmers aus den genannten Daten über die Verbindungsqualität ermittelt. Um dies zu ermöglichen, werden im Rahmen einer Initialisierungsphase die physikalischen und messtechnischen Gegebenheiten des Überwachungsbereiches in eine "Karte" (engl. map) überführt. Dabei werden einerseits die örtlichen Gegebenheiten (Aufteilung der Räume in einem Gebäude, Anordnung der Gänge, Treppen und Liftschächte) und andererseits die lokalen Ausbreitungsbedingungen der Funksignale berücksichtigt. Letztere können messtechnisch oder durch Simulation im Computer bestimmt werden. In einer nachfolgenden "Tracking-Phase" werden nicht nur einzelne Positionsschätzungen auf der Basis der Vorgaben der Initialisierungsphase durchgeführt, sondern auch ein wahrscheinlicher Verlauf des Fortbewegungspfades des Benutzers ermittelt. Es findet also eine zeitliche Verkettung von aufeinanderfolgenden Positionen statt. Durch diese Verkettung kann trotz einer ungenauen einzelnen Positionsschätzung eine hohe Zuverlässigkeit des ermittelten aktuellen Aufenthaltsortes erreicht werden.

Für die Erfindung ist es von Vorteil, wenn das Kommunikationssystem eine kleine Zellengröße aufweist. Auf diese Weise kann der Aufenthaltsort des Terminals besser eingegrenzt werden. Weil nämlich das Kommunikationssystem die Kommunikation über eine bestimmte Basisstation abwickelt, kann daraus der Schluß gezogen werden, daß sich das Terminal im funktechnischen Einzugsbereich der genannten Basisstation und nicht irgendwo anders aufhalten muß.

Die Zellen sollen so überlappen, daß das mobile Terminal an jeder Stelle des Überwachungsbereiches drei oder mehr Basisstationen empfangen kann. Infolgedessen kann die Verbindungsqualität in Bezug auf drei örtlich getrennte Basisstationen ausgewertet werden. Bei der Lokalisierung im zeitstabilen Kanal ist es von Vorteil, wenn das Kommunikationssystem mit Antennen-Diversity arbeitet.

Die Erfindung basiert im wesentlichen auf einer stetigen Verfolgung des Weges eines mobilen Terminals in der Zeit (User-Tracking) verbunden mit der Auswertung der momentanen Eigenschaften der Funkverbindungen. Das Verfahren kann in eine Initialisierungsphase (mit den nachfolgend beschriebenen Schritten 1 bis 5) und eine Tracking-Phase (mit den Schritten 6 bis 9) gegliedert werden. Die Initialisierungsphase wird im Prinzip nur einmal durchgeführt, die Tracking-Phase dagegen in regelmäßigen Zyklen. Unter einem Lokalisierungszyklus wird nachfolgend eine einmalige Durchführung der Schritte 6 bis 9 verstanden. (Der Einfachheit halber wird im folgenden jeweils nur von einem mobilen Terminal gesprochen. Selbstverständlich sind in der Praxis eine Vielzahl von solchen Terminals im System eingebunden.)

Der Ablauf des Verfahrens ist in Fig. 2 veranschaulicht.


1. Schritt:


Es wird der Überwachungsbereich definiert, in welchem die Lokalisierung eines mobilen Terminals stattfinden soll. Es kann sich z.B. um ein Bürogebäude mit mehreren Etagen und eine Vielzahl von einzelnen Räumen handeln. Für diesen Überwachungsbereich werden Basisstationen B1, B2, B3, B4 an geeigneten Orten derart plaziert, daß ein mobiles Terminal T an jeder Stelle des Überwachungsbereiches mit mindestens drei Basisstationen Funksignale austauschen kann. (Vorliegend wird davon ausgegangen, daß die Basisstationen und das Terminal Rechen- und Speicherkapazitäten haben, um die erforderlichen Berechnungen und Auswertungen durchführen zu können. Angesichts der heute zur Verfügung stehenden Mikroprozessoren bzw. anwendungsspezifischen Schaltungselemente ist es kein Problem, die erforderlichen Hardware-Voraussetzungen zu erfüllen.) In Fig. 2 ist dazu ein Umgebungskonfigurationsmodul M1 vorgesehen. Es handelt sich typischerweise um ein grafisches Eingabemodul.


2. Schritt:


Im Überwachungsbereich werden nun Referenz-Positionen P(i), i = 1 ... N, festgelegt (N = Gesamtzahl der Referenz-Positionen). Dies ist in Fig. 1 dargestellt, welche im Prinzip einen Grundrißplan eines Ganges 1 und dreier Räume 2, 3 und 4 (Überwachungsbereich) zeigt. Die Referenz-Positionen P1 bis P24 sind in geeigneter Weise auf den Überwachungsbereich verteilt. Es ist z.B. erkennbar, daß in jedem Raum 2, 3, 4 eine Mehrzahl von Referenz-Positionen P3 bis P8, bzw. P10 bis P15 bzw. P20 bis P23 definiert sind. Ferner ist in jedem Eingang je eine Referenz-Position P2, P16, P19 plaziert. Im Gang 1 sind die Referenz-Positionen P1, P9, P10, P18, P24 z.B. auf einer geraden Linie verteilt. (Im vorliegenden Beispiel ist die Verteilung der Referenz-Positionen P1, P9, P10, P18, P24 bewußt nicht gleichmäßig, damit gegenüber jedem Eingang auch eine Referenz-Position im Gang 1 ist.) Jede Referenz-Position ist mit einer eindeutigen Identifikation gekennzeichnet (im vorliegenden Fall der individuellen Nummer) und wird anhand von Koordinaten X(i) im Raum definiert. Die Dichte der Referenz-Positionen soll die zu erzielende Genauigkeit für die Lokalisierung nicht wesentlich unterschreiten. Sie soll aber auch nicht wesentlich darüber liegen, da dies die Effizienz des Verfahrens reduzieren würde. In Fig. 2 ist dafür das Referenz-Positions-Konfigurationsmodul M2 vorgesehen.

3. Schritt:

Für jede Referenz-Position P1 bis P24 wird eine sogenannte Referenz-Verbindungsqualität festgelegt. Im Prinzip handelt es sich um die Kombination einer Mehrzahl von Empfangsqualitätswerten, welche in Bezug auf mindestens drei Basisstationen bestehen. Mit anderen Worten: Jeder Referenz-Position wird eine Mehrzahl von Kenngrößen zugeordnet, welche die Verbindungsqualität zwischen einem an der Referenz-Position befindlichen Terminal und den drei genannten Basisstationen umschreiben. Wie bereits früher erwähnt, kann die Verbindungsqualität zwischen dem Terminal und einer bestimmten Basisstation selbst wiederum durch eine Mehrzahl von Kenngrößen umschrieben werden.

Die Kenngrößen können durch eine Serie von direkten Messungen an den den Referenz-Positionen entsprechenden Orten ermittelt werden. Es ist auch möglich, auf der Basis der architektonischen bzw. innenarchitektonischen Gegebenheiten (Raumaufteilung, verwendete Baumaterialien, vorhandenes Mobiliar etc.) die gesuchten Größen mit einem Simulationsprogramm theoretisch zu berechnen. Ein entsprechendes Verfahren ist z.B. in der EP 0 877 497 A2 beschrieben. In Fig. 2 ist dazu das Verbindungsqualitätsmodul M3 eingezeichnet.

4. Schritt:

Als nächstes wird die Übergangswahrscheinlichkeit W(i,j) ("Gangbarkeit") für jedes Paar von Referenz-Positionen P(i), P(j), $i \neq j$, festgelegt. Der Wert W(i,j) entspricht vorzugsweise dem Logarithmus der Wahrscheinlichkeit, daß ein mobiles Terminal innerhalb eines Lokalisierungszyklus von der Referenz-Position P(i) zur Referenz-Position P(j) wechselt. Dieser Wert kann beispielsweise auf der Basis der physikalischen Distanz zwischen den beiden Referenz-Positionen festgelegt werden. Die Geometrie der Umgebung wird natürlich einen Einfluß auf die Übergangswahrscheinlichkeit W(i,j) haben: sind die beiden Referenz-Positionen P(i) und P(j) durch eine Wand getrennt, und kann der Teilnehmer vernünftigerweise nicht innerhalb eines Lokalisierungszyklus von der ersten zur zweiten Referenz-Position wechseln, wird der Wert W(i,j) - im logarithmischen Maßstab - auf $\ll 0$ (z.B. auf $-\infty$) festgelegt. In Fig. 2 ist für den genannten 4. Schritt ein Übergangswahrscheinlichkeitskonfigurationsmodul M4 vorgesehen.

5. Schritt:

Zum Schluß der Initialisierung wird eine vorgegebene Anzahl L der Referenz-Positionen als Startpositionen P(I, t0), I = 1 ... L, ausgewählt und mit einer Wahrscheinlichkeit W(I, t0), I = 1 ... L, versehen, welche die Wahrscheinlichkeit wiedergibt, daß das mobile Terminal sich zur Zeit t = t0 bei der Startposition P(I, t0), I = 1 ... L, befindet. Im Prinzip handelt es sich bei den Startpositionen um Hypothesen, welche nötig sind, um einen ersten Lokalisierungszyklus durchführen zu können. Diese Eingaben erfolgen im Startpositionsmodul M5.

Nun folgt die User-Tracking-Phase, während welcher wiederholt die nachfolgenden Schritte durchgeführt werden, um den Fortbewegungspfad des Terminals zu verfolgen.

6. Schritt:

Das mobile Terminal, dessen Standort x(t1), t1 = t0+dt, es herauszufinden gilt, bestimmt die Verbindungsqualität Q(x) zwischen seinem (unbekannten) Standort x(t1) und jeder empfangbaren Basisstation des Netzes. Falls sich die Lokalisierungseinheit nicht im mobilen Terminal selbst befindet, werden die Daten über das Kommunikationssystem (d. h. über die Basisstation mit welcher das Terminal in direkter Verbindung steht) an eine Zentrale übermittelt. In der Regel umfaßt die Verbindungsqualität Q(x) eine Mehrzahl von einzelnen Meßwerten (wie z.B. Signalstärke, Verhältnis Signal zu Rauschen, Fehlerrate, momentane Zellenzugehörigkeit, Laufzeit, Interferenzstruktur). In Fig. 2 ist dieser Schritt im Verbindungsqualitätsmessmodul M6 enthalten.

7. Schritt:

In der Lokalisierungseinheit (welche ein Computer mit geeigneter Software sein kann) wird eine rechnerische Distanz D(I,x) = D(Q(x), Q(P(I)) zwischen der Verbindungsqualität Q(x), wie sie vom Terminal am Ort x ermittelt wurde, und der Referenz-Verbindungsqualität Q(P(I)), wie sie an den vorgegebenen Referenz-Positionen P(I), I = 1 ... L, im Rahmen der Initialisierungsphase definiert wurde, ermittelt. Diese rechnerische Distanz ist zum Beispiel ein Gesamtwert, welcher sich durch eine Mittelung aller auf die einzelnen Parameter der Verbindungsqualität bezogenen Abstände ergibt. Ist also beispielsweise die Verbindungsqualität auf der Basis der vier Parameter "Feldstärke", "Laufzeit", "Fehlerrate" und "Funkzellenzugehörigkeit" definiert, dann wird der Abstand zwischen der Verbindungsqualität Q(x) und der Referenz-Verbindungsqualität Q(P(I)) vorzugsweise dadurch errechnet, daß zunächst die vier Abstände D1 bis D4:

D1 = D(Q(x;"Feldstärke"), Q(P(l);"Feldstärke")),

D2 = D(Q(x;"Laufzeit "), Q(P(l);"Laufzeit ")),

D3 = D(Q(x;"Fehlerrate"), Q(P(l);"Fehlerrate")),

D4 = D(Q(x;"Funkzellenzugehörigkeit"), Q(P(l);"Funkzellenzugehörigkeit")),

bestimmt und dann die vier Abstandswerte (mit oder ohne Gewichtung gk) addiert bzw. gemittelt werden:

$$D(Q(x), Q(P(i))) = \frac{1}{4} \sum_{k=1}^{4} g_k D_k$$

In Fig. 2 ist dazu das Distanzbestimmungsmodul M7 eingezeichnet.

8. Schritt:

Unter Einsatz eines Viterbi-Algorithmus wird in der Lokalisierungseinheit für jede Referenz-Position P(l), l=1.. N, die Wahrscheinlichkeit W(I, t + dt) aktualisiert, daß sich das mobile Terminal nach diesem Lokalisierungszyklus an der Referenz-Position P(l) befindet. (Die Aktualisierung braucht nicht für alle N Referenz-Positionen durchgeführt zu werden. Normalerweise genügt es und ist es auch effizienter, nur eine bestimmte Teilmenge M<N der N Referenz-Positionen zu berücksichtigen.)
im Detail werden folgende Operationen durchgeführt:

I. Berechne für jede ehemalige Position (d.h. t=t1-dt) aus der Menge der L Referenz-Positionen {P(J,t), j = I... L} die Wahrscheinlichkeit W(J,I), dass das Terminal zur Position P(I) gelangt, und wähle daraus das Maximum: W(I, t=t0+dt)=max[W(J,t0)+g*W(J,I)+(1-g)*D(I,X)]. Dabei wurde die Wahrscheinlichkeit W(J,t), dass sich das Terminal im letzten Lokalisierungszyklus an Position P(J) befand, berücksichtigt. Das Gewicht g bestimmt den relativen Einfluss von Gangbarkeit und Verbindungsqualität auf die Lokalisierung. In der Regel wird g sehr viel kleiner als 0.5 sein. Soll die Gangbarkeit nicht berücksichtigt werden, kann g = 0 gesetzt werden.
II. Ersetze die ehemaligen Positionen (t=t0) in der Menge der L Referenz-Positionen {P(j),j=I,L} durch diejenigen L Positionen P(I),I=1,L, welche nun (t=t1) die L grössten Werte für W(I,t0+dt) aufweisen.

Während die Verwendung der Information über Gangbarkeit und Verbindungsqualität ein wichtiges Merkmal der Erfindung ist, stellt die angegebene lineare Kombination der logarithmischen Wahrscheinlichkeiten nur ein Beispiel vieler denkbarer Ausführungsformen dar. Anstelle der angegebenen Formel könnte beispielsweise auch folgende Funktion implementiert werden:

| W(I,t0+dt) = max{W(J,t0+D(I,X)] | falls die Gangbarkeit W(i,j) > W0 (W0 = vorgegebene Schwelle) |
|---|---|
| W(I,t0+dt) = -∞ | sonst (d.h. falls Gangbarkeit W(i,j) <= W0) |
|  | "max[W(J,t0)+D(I,X)]" bezeichnet den größten Wert der in Klammern angegebenen Formelresultate für alle Werte von J = 1 ... L. |

Im Prinzip geht es einfach darum, daß für jedes Pfadstück eine Wahrscheinlichkeit aus Gangbarkeit und Übereinstimmung der gemessenen Verbindungsqualität mit der Referenz-Verbindungsqualität ermittelt wird und daß diese mit der Aufenthaltswahrscheinlichkeit am Ausgangspunkt des Pfadstückes multipliziert wird (= Addition in den Logarithmen). Daraus erhält man neue Aufenthaltswahrscheinlichkeiten am Endpunkt des Pfadstückes zur Zeit t = t0+dt.
In Fig. 2 ist dazu das Viterbi-Rechenmodul M8 vorgesehen.

9. Schritt:

Aus der aktuellen Menge der L wahrscheinlichsten Referenz-Positionen berechnet die Lokalisierungseinheit den geschätzten aktuellen Standort und einen Zuverlässigkeitswert der Schätzung und gibt diese Ergebnisse an eine externe Anwendung (z.B. ein Personaldispositionssystem) weiter. (Vergleiche dazu das Standortberechnungsmodul M9 in Fig. 2.)

Damit ist ein (erster) Lokalisierungszyklus abgeschlossen. Der nächste Durchlauf beginnt wieder mit Schritt 6 (wobei t=t2=t1+dt).

Befinden sich mehrere mobile Terminals in derselben Umgebung, so werden die Schritte 5-9 für jedes Terminal separat durchgeführt. Es leuchtet ein, dass das beschriebene Verfahren an Effizienz gewinnt, wenn in Schritt 8 nicht jede Referenz-Position P(I), I = 1 ... N, berücksichtigt wird. Die meisten Kandidaten können aufgrund der Systeminformation (Funkzellenzugehörigkeit), der Gangbarkeit oder der Verbindungsqualität zum vornherein ausgeschlossen werden.

Das erfindungsgemässe Verfahren soll nachfolgend an einem realitätsnahen Beispiel erläutert werden. Dabei wird von einem Gebäude ausgegangen, in welchem nach Massgabe der Anforderungen des erfindungsgemässen Lokalisierungssystems ein Kommunikationssystem nach dem DECT (Digital Enhanced Cordless Telephony) Standard zu installieren ist. Die indoor Reichweite für ein solches Kommunikationssystem beträgt 30-50m. Die Zellen werden so ausgelegt, dass eine ausreichende Überlappung stattfindet (an jedem möglichen Aufenthaltsort des mobilen Terminals sollen mindestens drei Basisstationen in der Liste der möglichen Verbindungen des Terminals eingetragen werden können). Diese Systemauslegung findet im 1. Schritt statt.

Die für das genannte System typischerweise angestrebte Lokalisierungsgenauigkeit liegt etwa bei 3m. Insbesondere sollte es möglich sein den Raum zu bezeichnen, in welchem sich das mobile Terminal gerade befindet. Diese Lokalisierungsgenauigkeit kann mit etwa einer Referenz-Position pro vier Quadratmeter erreicht werden. Referenz-Positionen sind überall dort vorzusehen, wo später ein mobiles Terminal lokalisiert werden soll (z.B. auf jedem Stockwerk, in allen Räumen, in Treppenhäusern, in Liftschächten etc.). Zur effizienten Bestimmung der Gangbarkeit zwischen Positionen werden die Referenz-Positionen entsprechend den Räumen zusammengefasst (siehe dazu weiter unten). Es ist bei der Wahl der Referenz-Positionen von Vorteil, wenn jede Zutrittsmöglichkeit zu einem Raum (z.B.

Türen, Fenster, Lifte, Treppen, Durchgänge, etc.) mindestens eine eigene Referenz-Position zugeteilt erhält (2. Schritt).

Die Daten, welche die Qualität des Funkkontaktes zwischen dem mobilen Terminal und dem ortsfesten Teil des Kommunikationssystems beschreiben, können sehr umfassend verstanden werden. Dazu können insbesondere die Anzahl und die Identifikation der Basisstationen gehören, die mit dem Terminal an einem bestimmten Ort x in Funkkontakt treten können. Weiter können dazu die jeweilige Streufunktion dieser Funkstrecken und alle daraus ableitbaren Grössen gehören. Darunter fällt unter anderem die Dämpfung und die Laufzeit des Funksignals oder die spezielle Struktur der Überlagerung von verschiedenen Ausbreitungspfaden. Weiter gehört dazu die aus dem übertragenen kodierten Signal gewinnbare Information, z.B. die Bitfehlerrate (BER) oder die Analyse eines Testsignals (z. B. Kanalstossantwort, engl. Channel Impulse Response).

Der in der vorliegenden Beschreibung verwendete Begriff der ortsabhängigen "Verbindungsqualität Q(x)" kann - muss aber nicht - alle diese Daten umfassen. Das erfindungsgemässe Verfahren benötigt im Prinzip nur eine kleine Auswahl von Parametern, die aber von der Art des Kommunikationssystems abhängt. Im genannten Beispiel kann die Anzahl und Identifikation der sichtbaren (empfangbaren) Basisstationen zusammen mit der jeweiligen Dämpfung des Funksignals verwendet werden. Die Identifikation der sichtbaren Basisstationen und die Empfangsfeldstärke (RSSI-Signal) z.B. ist in modernen mobilen Terminals software-mässig zugänglich, so dass das Kommunikationssystem für die Anwendung der Erfindung nicht umprogrammiert werden muss.

Einige der genannten Merkmale weisen starke stochastische Schwankungen auf, weshalb es sich empfiehlt, einen ortsabhängigen Mittelwert als Merkmal der Verbindungsqualität zu definieren. Z.B. können während einer vorgegebenen Zeitdauer mehrere Messwerte der Empfangsfeldstärke aufgenommen werden. Der repräsentative Mittelwert wird dann z.B. durch ein Median-Filter ermittelt.

In der Initialisierungsphase müssen nicht nur die Parameter der Verbindungsqualität Q(x) sondern auch eine Distanzfunktion D(Q1,Q2) zwischen zwei Verbindungsqualitäten Q1, Q2 definiert werden. Vorzugsweise bildet sich die Distanzfunktion aus einer gewichteten quadratischen Summe der Abstände einzelner Merkmale der Verbindungsqualität. Der Abstand D könnte z.B. folgendermassen definiert werden:

$$D(Q_1, Q_2) = \sqrt{D_{id}^2 + D_{rssi}^2}$$

$$D_{id}^2(Q_1, Q_2) = 0, \text{ falls } B > 1$$

$$D_{id}^2(Q_1, Q_2) = \infty, \text{ falls } B \leq 1$$

B=Anzahl gleichzeitig sichtbarer Basisstationen in Q1 und Q2

$$D_{rssi}^2(Q_1,Q_2) = \frac{1}{B} \sum \left( \left| rssi1 - rssi2 \right|^2 \right)$$

D_id ist der Abstand bezüglich des Merkmals "Identifikation von Basisstationen" und D_rssi ist der Abstand bezüglich des Merkmals "RSSI-Signal". Der Abstand D(Q1,Q2) der Verbindungsqualitäten Q1 und Q2 ist dann die quadratische Summe der einzelnen Merkmalsabstände mit dem Gewicht 1.

Die ausgewählten Merkmale der Verbindungsqualität müssen für alle vorbestimmten Positionen ausgewertet und gespeichert werden. Dies kann durch eine Messung erfolgen oder durch eine entsprechende theoretische Berechnung, gegebenenfalls mit Computerunterstützung.

Im 4. Schritt wird die Wahrscheinlichkeit W(I,J) definiert, dass das mobile Terminal in einem Lokalisierungszyklus von Position P(I) nach Position P(J) wechselt. Da in der Umgebung mit einer grossen Anzahl von Positionen gerechnet werden muss, kann es aufwendig sein, diese Wahrscheinlichkeit für jedes Paar {P(I),P(j)} abzuspeichern. Das folgende Konzept der Raumaufteilung schafft Abhilfe.

Ein "Referenzpositionsraum" ist eine Menge von Referenz-Positionen, deren paarweise Gangbarkeit (Übergangswahrscheinlichkeit) gross ist. Im Gebäude entspricht ein Referenzpositionsraum meist dem baulich durch Wände abgetrennten Raum. Er ist durch die Wände mit Gangbarkeit -∞ begrenzt. Referenz-Positionen in einem Durchgang zwischen Räumen bilden einen eigenen Referenzpositionsraum. Ein solcher "Durchgangsraum" ist Nachbar von denjenigen Räumen, die er verbindet. Der durch einen baulich vorgegebenen Raum definierte Referenzpositionsraum ist Nachbar zu all seinen angrenzenden Durchgansräumen. Mit diesen Definitionen kann nun die Gangbarkeit z.B. folgendermassen definiert werden:

| $W(I,J){=}{-}|X(I){-}X(J)|^2$ | falls P(I) und P(J) im selben oder benachbarten Referenzpositionsraum liegen; |
|---|---|
| $W(I,J){=}{-}\infty$ | sonst. |

Hier sind X(.) die Raum-Koordinaten (x, y, z) von Position P(.). Wenn für jede Referenz-Position neben ihren Koordinaten auch die Raumzugehörigkeit vermerkt ist und gleichzeitig jeder Referenzpositionsraum seine Nachbarn kennt, kann die Gangbarkeit beliebiger Positionen äusserst effizient bestimmt werden.

Im Beispiel gemäss Fig. 1 könnte dies zu folgender Gruppierung führen: Die Referenz-Positionen P1, P9, P16, P18, P24 definieren einen Referenzpositionsraum "Gang 1". Die Referenz-Positionen P3 bis P8 bilden einen Referenzpositionsraum "Raum 2". Die Referenz-Position P2 bildet einen eigenen Referenzpositionsraum "Eingang zu Raum 2" etc. Der Referenzpositionsraum "Gang 1" {P1, P9, P16, P18, P24} ist benachbart zu den Referenzpositionsräumen "Eingang zu Raum 2" {P2}, "Eingang zu Raum 3" {P17} und "Eingang zu Raum 4" {P19}. Ferner ist der "Eingang zu Raum 2" {P2} einziger Nachbar von "Raum 2" [P3-P8] etc..

Die Übergangswahrscheinlichkeiten würden nach folgendem Muster berechnet:

W(P6,P10)=-∞,     W(P12,P20)=-∞,     etc.

$W(P1,P2){=}{-}|X(1){-}X(2)|^2$ ,     $W(P1,P4){=}{-}|X(1){-}X(4)|^2$     etc.

Um die User-Tracking-Phase starten zu können, muss der Lokalisierungseinheit für jedes mobile Terminal ein Anfangsstandort angegeben werden. Diese Information kann z.B. dadurch gewonnen werden, dass das mobile Terminal von einer Docking-Station mit bekanntem Standort abgehoben wird. Oder aber es existiert eine automatische elektronische Registrierung an einer Eingangspforte. Gibt es keine eindeutig bestimmte Ausgangsposition, können hilfsweise alle Referenz-Positionen, welche innerhalb einer vorgegebenen Toleranz mit der Verbindungsqualität verträglich sind, in die Liste der Startpositionen aufgenommen werden. ("Verträglich" heisst in diesem Zusammenhang, dass kein offensichtlicher Widerspruch besteht. Nicht "verträglich" wäre eine Startposition, welche z.B. in einem Bereich liegt, der von der Basisstation, mit welcher das Terminal zu Beginn kommuniziert, gar nicht funktechnisch erreichbar ist.)

Als Lokalisierungseinheit wird die Stelle verstanden, wo die Daten gesammelt und erfindungsgemäss verarbeitet werden. Folgende Varianten sind möglich:

a) Die Lokalisierungseinheit befindet sich im vollständig autonomen mobilen Terminal. Das Terminal prüft regelmässig alle Funkverbindungen zu Basisstationen, fordert über eine Datenverbindung des Kommunikationssystems die Referenzwerte der Positionen der umliegenden Räume an und bestimmt seinen Standort selbst. Der jeweilige Standort kann dann bei Bedarf über die Datenverbindung vom mobilen Terminal abgefragt werden. Diese dezentrale Ausführungsform hat den Vorteil, dass die Lokalisierungskapazität automatisch mit der Anzahl mobiler Terminals wächst. Ein Vorteil ist auch der niedrige, bewegungsabhängige Datenverkehr. Allerdings sind nur die mit dem vollen Algorithmus ausgerüsteten mobilen Terminals zur Lokalisierung fähig. Konventionelle Terminals können zwar für die übliche Kommunikation (z.B. Sprachübertragung) benutzt werden, sind aber nicht mit dem erfindungsgemässen Verfahren automatisch lokalisierbar.

b) Die Lokalisierung wird vollständig in einer Zentrale vorgenommen. Die Verbindung wird von der Basisstation zu den einzelnen mobilen Terminals geprüft. Der Vorteil dieser Variante ist, dass ein mobiles Terminal in keiner Weise über besondere Fähigkeiten verfügen muss, um lokalisierbar zu sein. Jedoch erfordert diese Variante erhöhte Anforderungen an die Koordination und Verwaltung der Daten von mehreren mobilen Teilnehmern.

c) Bevorzugt ist die folgende Lösung, weil sie Vorteile beider vorangegangener Varianten in sich vereinigt. Das mobile Terminal sammelt autonom über einen gewissen Zeitraum Daten über seine Funkverbindungen. Dabei kann die Synchronisierung der Datenaufnahme vom Terminal dezentral vorgenommen werden. Die Daten werden dann in regelmässigen Abständen paketweise an die Lokalisierungseinheit gesendet. Diese befindet sich an einer zentralen Stelle des Kommunikationssystems. Der zusätzliche Datenverkehr kann so in Grenzen gehalten werden.

Zur Wahrscheinlichkeitsanalyse gemäss dem 7. Schritt ist folgendes zu sagen. Werden der Abstand und die Gangbarkeit wie oben vorgeschlagen definiert, müssen für die Abstandsbestimmung in diesem und in den folgenden Schritten nur die Referenz-Positionen im jeweiligen Referenzpositionsraum selbst und in seinen Nachbarräumen berücksichtigt werden. Dies ist wichtig, um eine effiziente Berechnung zu ermöglichen. Die Lokalisierung ist dann ein lokaler Prozess und damit unabhängig von der Grösse des gesamten Überwachungsbereiches.

Der Viterbi-Algorithmus ist aus der digitalen Signalübertragungstechnik bekannt. Er findet in erster Linie bei der Decodierung von Datensignalen in Empfängern breite Anwendung. Aus diesem Grund sind standardisierte integrierte Schaltungen auf dem Markt erhältlich, welche spezifisch zur Durchführung des Viterbi-Algorithmus ausgebildet sind. Diese Chips können mit Vorteil bei der oben genannten Variante a) zur Anwendung kommen. Hat das Kommunikationssystem einen zentralen Rechner, dann kann der Viterbi-Algorithmus auch als Software implementiert werden. In diesem Fall kann jedes mobile Terminal seinen eigenen Lokalisierungsalgorithmus im Zentralrechner anstossen, so dass in periodischen Lokalisierungszyklen der Terminal-Standort bestimmt wird. Die Grössenordnung einer Periode liegt vorzugsweise etwa bei einer Sekunde.

Charakteristisch für den Viterbi-Algorithmus ist, dass mehrere Pfad-Varianten mit verschiedener Wahrscheinlichkeit offengehalten werden und dass immer nur die unwahrscheinlichsten eliminiert werden. Dies jedoch ohne sich die ganze Geschichte der Pfad-Varianten merken zu müssen. Ist ein Abstand zwischen der gemessenen Verbindungsqualität und der Referenz-Verbindungsqualität gross durch eine zufällige Schwankung, dann kann dieser Pfad durch spätere Übereinstimmung trotzdem wieder gewählt werden.

Dies ist in Fig. 1 veranschaulicht. ai bezeichnet jeweils die Position grösster Wahrscheinlichkeit und bi diejenige zweitgrösster Wahrscheinlichkeit. Ausgangspunkt ist die Referenz-Position P24. (In dieser sollen sich der Einfachheit halber die aus der Vergangenheit kommenden Pfade treffen.) Im folgenden wird angenommen, dass sich der Teilnehmer in den Raum 3 begibt. Aufgrund von Signalschwankungen ermittelt nun aber die Lokalisierungseinheit zu den Zeitpunkten t2 und t3 die Referenz-Position P19 als wahrscheinlichsten Aufenthaltsort (vgl. a2 und a3). Der tatsächliche Weg über P18 und P17 (vgl. b2, b3) wird dagegen nur als zweitwahrscheinlichster Pfad ermittelt. Im Zeitpunkt t3 kann nun die Referenz-Position P13 als wahrscheinlichste erkannt werden, womit wieder der tatsächliche Weg des Terminals als wahrscheinlichster eingestuft wird. Begibt sich der Benutzer zur Referenz-Position P14, wird sich der Pfad P24/P19/P20 möglicherweise als derart unwahrscheinlich herausstellen, dass er vom Viterbi-Algorithmus sogar eliminiert werden dürfte.

In Fig. 1 sind die Referenz-Positionen P20 und P14 durch eine Wand getrennt. Der direkte Übergang ist ausgeschlossen. Legen im Lauf der Betriebszeit viele Benutzer den Weg P24 nach P14 zurück, so können sich zwei Fälle einstellen: Einerseits können manche Pfade via P18-P17-P13 sofort gefunden und andererseits können gewisse Pfade zuerst wie beschrieben nach P19-P20 umgeleitet und erst nachträglich auf P18-P17-P13 korrigiert werden (aufgrund des wegen der Wand als unmöglich vorgegebenen Übergangs P20-P14). Sind diese beiden Fälle statistisch gleichverteilt, so kann angenommen werden, dass der Unterschied auf Messfehlern der gerade gemessenen Verbindungsqualität beruht. Ist die Umweg-Variante via P19-P20 statistisch signifikant häufiger anzutreffen, dann muss angenommen werden, dass die Verbindungsqualität an der Referenz-Position P17 nicht mehr den aktuellen Verhältnissen entspricht, dass also Q(P17) nicht mit dem aktuell gemessenen Q(x) in der Umgebung von P17 übereinstimmt (sonst wäre ja direkt P17 als wahrscheinlichster Standort zur Zeit t=t3 gefunden worden).

Aus den vielen im Laufe der Zeit gemachten Messungen, welche zu Pfadkonstellationen gehören, bei welchen nachträglich eine Korrektur von P19 auf P17 erfolgt, kann man die an der Referenz-Position P17 im Moment "richtige" Verbindungsqualität gewinnen und die Referenz-Verbindungsqualität Q(P17) entsprechend korrigieren.

Der verfahrensmässige Ablauf könnte für dieses (stark vereinfachte) Beispiel wie folgt aussehen. (Es wird wiederum angenommen, daß ein Pfad zur Zeit t = t1 in der Referenz-Position P24 startet. Für die nachfolgenden Überwachungszyklen werden die folgenden Wahrscheinlichkeitslisten gefunden (wobei "P(i)>P(j)" bedeuten soll, daß die Referenz-Position P(i) in der jeweiligen Liste, welche im vorliegenden Fall der Einfachheit nur aus L = 2 Werten besteht, eine höhere Wahrscheinlichkeit hat als die Referenz-Position P(j)):

t2: {P19>P18} aufgrund der Messung Q(t2)

t3: {P19>P17} aufgrund der Messung Q(t3)

t4: {P13>P20} aufgrund der Messung Q(t4)

Mit der vierten Messung entscheidet der Viterbi-Algorithmus, dem Pfad P18-P17-P13 die höhere Wahrscheinlichkeit einzuräumen als dem Pfad P19-P19-P20. Das heisst indirekt, dass die aktuellen Messwerte Q(t=t2) an der Referenz-Position P18 durchgeführt wurden (aber nicht genau mit der Referenz-Verbindungsqualität Q(P18) übereinstimmten). Dasselbe gilt für Q(t3) und die Referenz-Position P17. Deshalb kann nun die gespeicherte Referenz-Verbindungsqualität z.B an Referenz-Position P18 ein wenig korrigiert werden:

$$Q(P18)\_korrigiert = ((1-c)*Q(P18)\_alt + c*Q(t=2)).$$

"c" ist dabei ein klein gewählter Gewichtungsfaktor, der die Korrektur erst relevant werden läßt, wenn viele Korrekturen in dieselbe Richtung zielen. Sind die Korrekturen in negativen und positiven Beiträgen gleichverteilt, dann verändert sich die Referenz-Verbindungsqualität Q(P18) nicht. Mit anderen Worten: Die Referenz-Verbindungsqualität entspricht genau dem Mittelwert aller aktuellen Messungen, welche aufgrund ihrer Pfadwahrscheinlichkeit auf diese Position lokalisiert werden.

Die Anzahl der jeweils möglichen Varianten wird durch die Anzahl L der von Zyklus zu Zyklus aufdatierten Positionen eingestellt. Die Zahl L kann fest gewählt werden oder sich der Wahrscheinlichkeitsverteilung der L Positionen anpassen.

Nach der Lokalisierung steht für jedes mobile Terminal im Überwachungsgebiet eine Liste mit den L wahrscheinlichsten Positionen zur Verfügung. Jede Position ist mit einer Wahrscheinlichkeit versehen. Je nach Anwendung sind verschiedene Ausgabemöglichkeiten denkbar. Es kann z.B. die wahrscheinlichste Position ausgegeben werden und deren Raumzugehörigkeit. Es kann auch ein Mittelwert ausgegeben werden, in welchem die Koordinaten der Positionen entsprechend der jeweiligen Wahrscheinlichkeit gewichtet werden. Die Standardabweichung dieser Positionen kann als Mass für die Zuverlässigkeit der Lokalisierung ausgegeben werden. Für gewisse Anwendungen kann es sinnvoll sein, für jedes mobile Terminal die Geschichte der Pfadentwicklung aufzuzeichnen und darzustellen. Diese Aufzeichnungen können in einer Datenbank gespeichert werden und später zum Überprüfen und Adaptieren der Übergangswahrscheinlichkeiten benutzt werden.

Aus der Menge der L Referenz-Positionen P(J), J = 1..L, kann auch der Erwartungswert ermittelt werden, welcher dann als aktuelle Position ausgegeben wird. Weil für jede der genannten L Referenz-Positionen eine Übergangs- bzw. Aufenthaltswahrscheinlichkeit W(J,t) berechnet worden ist (vgl. Schritte 8-9), kann ein Erwartungswert des Ortes X(t) nach folgender Formel berechnet werden:

$$X(t) = \sum_{J=1}^{L} W(J,t)P(J) \Big/ \sum_{J=1}^{L} W(J,t)$$

Es ist anzufügen, daß nicht alle L Referenz-Positionen in die Berechnung des Erwartungswertes X(t) einzugehen brauchen.

Prinzipiell kann das Verfahren in einem beliebigen drahtlosen Kommunikationssystem angewendet werden. Es soll aber trotzdem kurz erwähnt werden, weshalb z.B. DECT dazu speziell geeignet ist. Einerseits ist die Reichweite in Gebäuden mit 30-50 m recht kurz, so dass kleine Zellen die Vorsortierung der möglichen Positionen P(I) erleichtern. Andererseits sorgt die Diversity-Technik dafür, dass die Abhängigkeit von Fading reduziert wird. Solange sich das mobile Terminal bewegt oder der Kanal zeitvariant ist, kann das Fading statistisch ausgeglichen werden. Bei stationärem Terminal und Kanal ist jedoch eine flexible Antennentechnologie von Vorteil.

Man muss davon ausgehen, dass auch die Referenz-Verbindungsqualität an den Referenz-Positionen mit Fehlern behaftet ist. Fehler können schon von Anfang an bestehen oder aber erst durch eine nachträgliche Änderung der Ausbreitungsbedingungen hervorgerufen werden (Umbau, Änderung der Einrichtung, Auswechseln einer Basisstation). Es ist von Vorteil, wenn sich das Kommunikationssystem solchen kleineren Änderungen automatisch anpasst, ohne dass die Initialisierungsphase nochmals durchgeführt werden muss.

In Fig. 1 sind die Referenz-Positionen P20 und P14 durch eine Wand getrennt. Der direkte Übergang ist ausgeschlossen. Wird diese Wand im Rahmen eines Umbaus entfernt, wird der Betreuer des erfindungsgemässen Lokalisierungssystems die Übergangswahrscheinlichkeit anpassen. Diese allein genügt jedoch nicht. Für die Referenz-Positionen in den beiden betroffenen Räumen wird sich die Verbindungsqualität mehr oder weniger stark ändern. Wird die Referenz-Verbindungsqualität nicht angepasst, wird das Lokalisierungssystem immer wieder Pfade bis zur Referenz-Position P20 erzeugen und dann als unwahrscheinlich gegenüber Pfaden zur Position P13 eliminieren. Bei jeder solchen nachträglichen Korrektur an einer bestimmten Position stehen sich der ursprüngliche Referenzwert der Verbindungsqualität und die aktuell gemessene Verbindungsqualität widersprüchlich gegenüber. Tritt nun bei einer Position diese Korrektur gehäuft auf, darf unter bestimmten Bedingungen angenommen werden, dass die Referenz-Verbindungsqualität aus irgend einem Grund nicht mehr der aktuellen Situation entspricht. Stimmen die aus mehreren Korrekturen gemessenen Verbindungsqualitäten überein, so können zweifelhaft erscheinende Referenzwerte durch während des Betriebs gesammelte Messungen korrigiert oder ersetzt werden.

Ein Lokalisierungsverfahren der beschriebenen Art kann vielseitig eingesetzt werden.

Beispiel 1: Systemsteuerung

Die Information über den Aufenthaltsort des mobilen Terminals kann für die Steuerung des Kommunikationssystems verwendet werden. Aus dem Pfad eines mobilen Terminals können Rückschlüsse auf seinen wahrscheinlichsten weiteren Verlauf gezogen werden. Ausserdem ist durch die Datenbank der Referenzwerte an den Positionen die Verbindungsqualität in einer Umgebung des mobilen Terminals bekannt. Der unterbruchsfreie Wechsel der Basisstation (Handover, auch Hand-off genannt) durch das mobile Terminal kann so vorhergesehen und für die wahrscheinlichste weitere Bewegung optimiert werden. Da der mit einem Handover verbundene Funkverkehr die Kapazität des Kommunikationssystems stark belastet, bringt eine sparsame und gezielte Durchführung des Handover einen deutlichen Kapazitätsgewinn verbunden mit einer hohen Betriebssicherheit.

Beispiel 2: Lokalisierung als Dienstleistung und Planungshilfe.

In einem Industriekomplex beispielsweise werden Personen oder auch Gegenstände mit mobilen Terminals versehen. Das Kommunikationssystem ist dann nicht nur in der Lage, die Kommunikation zwischen den Terminals zu gewährleisten, sondern kann ausserdem auch deren Position angeben. Mit dem beschriebenen Verfahren kann z.B. die Funksteuerung eines mobilen Roboters gerade auch Information über seine Position übermitteln. Ist der Roboter zusätzlich mit Weg-Sensoren (Odimetrie) ausgerüstet, kann deren Weg-Information mit in die erfindungsgemässe Wahrscheinlichkeitsanalyse der Pfade einbezogen werden. In Grossbetrieben können Personen und Gegenstände schnell gefunden und effizient eingesetzt werden (z.B. Pflegepersonal in Spitälern, Altersheimen).

Beispiel 3: Lokalisierung in der Überwachung

Sicherheitspersonal kann mit mobilen Terminals ausgerüstet werden. Bei einem Notfall kann dieses einen Alarm auslösen. Die erfindungsgemässe Lokalisierung erlaubt die Kommunikation mit einer Zentrale, welche mit dem eingegangen Alarmruf sofort den gegangenen Pfad und den Ort des Alarms angezeigt bekommt. Die Zentrale kann sich natürlich auch den aktuellen Aufenthaltsort weiteren Personals anzeigen lassen und so schnell und richtig auf den Alarm reagieren. In risikoreichen Industrieanlagen können Träger eines mobilen Terminals von einer Zentrale automatisch durch einen Anruf darauf aufmerksam gemacht werden, dass sie sich in einer Gefahrenzone befinden, sobald der Lokalisierungsalgorithmus eine Überlappung von Gefahrenzone und Aufenthaltsort feststellt.

Ganz allgemein können Personen, welche mit einem in ein erfindungsgemässes Lokalisierungssystem eingebundenen mobilen Terminal ausgerüstet sind, lokalisiert werden. Bei Bedarf kann das System auch deren Bewegung dokumentieren (z.B. als Sicherheit). Dies kann z.B. für ältere Personen wichtig sein, die plötzlich Hilfe brauchen.

Allgemeiner ausgedrückt besteht das erfindungsgemässe Lokalisierungsverfahren darin, die Lokalisierung (Suche nach wahrscheinlichstem Aufenthaltsort) durch eine Suche nach dem wahrscheinlichsten Pfad zu ersetzen und erst daraus den aktuellen Aufenthaltsort des mobilen Terminals abzuleiten. In die Wahrscheinlichkeitsanalyse eines ganzen Pfades gehen neben der Gangbarkeit Messungen und Referenzwerte der Verbindungsqualität an vielen verschiedenen Aufenthaltsorten ein. Diese nichtlokale Verarbeitung der Information ermöglicht den Gewinn an Robustheit gegenüber unvermeidbaren lokalen Abweichungen zwischen der einzelnen Messung der Verbindungsqualität und den entsprechenden Referenzwerten.

Eine statistisch gehäuft auftretende lokale Abweichung an bestimmten Positionen deutet auf fehlerhafte lokale Referenzwerte hin. Letztere können dann mit der nichtlokalen Information so angepasst werden, dass die gemessenen lokalen Abweichungen möglichst gering ausfallen. Das erfindungsgemässe Verfahren erhält damit die Fähigkeit zur Selbst- Adaption an leicht geänderte Umgebungsbedingungen. Es genügt auch schon, wenn die Lokalisierungseinheit dem Systemverantwortlichen anzeigen kann, wo möglicherweise Unstimmigkeiten zwischen der Vorgabe und den ermittelten Messwerten bestehen.

Zusammenfassend ist festzustellen, dass das erfindungsgemäße Positionsbestimmungsverfahren robust ist gegen zufällige Störungen und Unsicherheiten, sowohl in der Datenaufnahme wie auch in der Messung der Verbindungsqualität. Jede einzelne Positionsbestimmung kann mit einer Fehler Abschätzung versehen werden, wodurch die Zuverlässigkeit des Verfahrens wesentlich erhöht wird.

## Patentansprüche

1. Verfahren zum Bestimmen einer aktuellen Position eines in einem Kommunikations-system eingebundenen mobilen Terminals (T) innerhalb eines vorgegebenen Überwachungsbereiches (1, 2, 3, 4), wobei in einem Überwachungszyklus Funksignale mit mindestens einer Basisstation (B1, B2, B3, B4) ausgetauscht werden, dadurch gekennzeichnet, dass mindestens zwei Positionsschätzungen gemacht werden, dass unter Berücksichtigung von Positionsschätungen mindestens eines vergangenen Überwachungszyklus mindestens zwei verschiedene Fortbewegungspfade und deren Pfadwahrscheinlichkeiten ermittelt werden und dass die aktuelle Position unter Berücksichtigung der Pfadwahrscheinlichkeiten der Fortbewegungspfade bestimmt wird.

2. Verfahren nach Anspruch 1, dadurch gekennzeichnet, dass die Fortbewegungspfade und deren Pfadwahrscheinlichkeiten mit einem Viterbi-Algorithmus ermittelt werden.

3. Verfahren nach Anspruch 1 oder 2, dadurch gekennzeichnet, dass die Positionsschätzungen durch Vergleich einer gemessenen Verbindungsqualität $Q(x)$ mit einer vorgegebenen Referenz-Verbindungsqualität $Q(P(I))$ gemacht werden, wobei die Referenz-Verbindungsqualität $Q(P(I))$ einer vordefinierten Referenz-Position $P(I)$ zugeordnet ist.

4. Verfahren nach Anspruch 3, dadurch gekennzeichnet, dass der Vergleich auf der Basis einer rechnerischen Distanzbestimmungsfunktion $D(Q(x),Q(P(I)))$ durchgeführt wird, wobei eine analytische Distanz zwischen der gemessenen Verbindungsqualität $Q(x)$ und der Referenz-Verbindungsqulität $Q(P(I))$ berechnet wird.

5. Verfahren nach einem der Ansprüche 1 bis 4, dadurch gekennzeichnet, dass für alle Paare von Referenz-Positionen $(P(i), P(j))$, welche bei der Bestimmung der aktuellen Position zumindest grundsätzlich in Frage kommen, eine einer vorhandenen Topologie des Überwachungsbereiches (1, 2, 3, 4) entsprechende Übergangswahrscheinlichkeit $(W(i,j))$ ermittelt wird.

6. Verfahren nach einem der Ansprüche 1 bis 5, dadurch gekennzeichnet, dass zur Initialisierung einer Tracking-Phase eine Mehrzahl L von Startpositionen $(P(I), I = 1...L)$ vorgegeben wird.

7. Verfahren nach einem der Ansprüche 1 bis 6, dadurch gekennzeichnet, dass die aktuelle Position durch eine Mittelung von mindestens zwei Referenz-Positionen bestimmt wird, wobei die Referenz-Positionen zwei verschiedenen Fortbewegungspfaden hoher Pfadwahrscheinlichkeit angehören.

8. Verfahren nach einem der Ansprüche 3 bis 7, dadurch gekennzeichnet, dass für die Verbindungsqualität mindestens einer der Parameter "Funkzellenzugehörigkeit", "Fehlerrate", "Laufzeit", "Feldstärke" verwendet wird.

9. Verfahren nach einem der Ansprüche 5 bis 8, dadurch gekennzeichnet, dass die Verbindungsqualität $Q(P(I))$ angepasst wird, wenn bei einer bestimmten Referenz-Position $(P(I))$ beim Vergleich der gemessenen Verbindungsqualität mit der Referenz-Verbindungsqualität wiederholt eine geringe Ähnlichkeit bzw. eine verhältnismäßig große Distanz festgestellt wird, wenn aber unter Berücksichtigung einer Wahrscheinlichkeit des Fortbewegungspfades als ganzes ein Durchgang durch die genannte Referenz-Position ermittelt wird.

10. Einrichtung mit mindestens einem mobilen Terminal und mindestens einer Basisstation (B1, B2, B3, B4) als Teil eines Kommunikationssystems und mit Mitteln zum Bestimmen einer aktuellen Position des Terminals innerhalb eines vorgegebenen Überwachungsbereiches, gekennzeichnet durch

a) erste Mittel zum Durchführen von Positionsschätzungen,

b) zweite Mittel zum Bestimmen von mindestens zwei verschiedenen Fortbewegungspfaden unter Berücksichtigung von Positionsschätzungen mindestens eines vergangenen Überwachungszyklus und

c) dritte Mittel zum Bestimmen der aktuellen Position unter Berücksichtigung einer Pfadwahrscheinlichkeit des jeweiligen Fortbewegungspfades.

11. Einrichtung nach Anspruch 10, gekennzeichnet durch einen Viterbi-Algorithmus Rechner, welcher die Fortbewegungspfade und deren Pfadwahrscheinlichkeiten ermittelt.

12. Einrichtung nach Anspruch 10 oder 11, gekennzeichnet durch Mittel zum Messen einer Verbindungsqualität am Ort des mobilen Terminals und insbesondere Mittel zur rechnerischen Auswertung einer Distanzbestimmungsfunktion ($D(Q(x),Q(P(I)))$), wobei eine analytische Distanz zwischen einer gemessenen Verbindungsqualität ($Q(x)$) und einer Referenz-Verbindungsqulität ($Q(P(I))$) berechnet wird.

13. Einrichtung nach einem der Ansprüche 10 bis 12, gekennzeichnet durch mindestens eine Docking-Station, welche eine exakte Postion des Terminals an eine Lokalisierungseinheit abgeben kann.

14. Einrichtung nach einem der Ansprüche 10 bis 13, dadurch gekennzeichnet, dass das mobile Terminal ein Handapparat eines Schnurlostelefons ist.

15. Einrichtung nach einem der Ansprüche 10 bis 12, dadurch gekennzeichnet, dass eine Lokalisierungseinheit im mobilen Terminal integriert ist.

16. Mobiles Terminal, welches mit einer Basisstation (B1, B2, B3, B4) eines Kommunikationssystems drahtlos in Verbindung treten kann, gekennzeichnet durch eine Lokalisierungseinheit mit

d) ersten Mitteln zum Durchführen von Positionsschätzungen,

e) zweiten Mitteln zum Bestimmen von mindestens zwei verschiedenen Fortbewegungspfaden und deren Pfadwahrscheinlichkeiten unter Berücksichtigung von Positionsschätzungen mindestens eines vergangenen Überwachungszyklus und

f) dritten Mitteln zum Bestimmen der aktuellen Position unter Berücksichtigung der Pfadwahrscheinlichkeiten der Fortbewegungspfade.

17. Rechner mit einem Programm zur Lokalisierung eines in einem Kommunikationssystem eingebundenen mobilen Terminals innerhalb eines Überwachungsbereiches, gekennzeichnet durch

a) erste Mittel zum Durchführen von Positionsschätzungen auf der Basis von gemessenen Daten,

b) zweite Mittel zum Bestimmen von mindestens zwei verschiedenen Fortbewegungspfaden und deren Pfadwahrscheinlichkeiten unter Berücksichtigung von Positionsschätzungen mindestens eines vergangenen Überwachungszyklus und

c) dritte Mittel zum Bestimmen der aktuellen Position unter Berücksichtigung der Pfadwahrscheinlichkeiten der Fortbewegungspfade.

Fig. 1

Fig. 2

EP 1 109 031 A1

**Europäisches Patentamt**

**EUROPÄISCHER RECHERCHENBERICHT**

Nummer der Anmeldung

EP 99 81 1139

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| Y | FR 2 724 021 A (THOMSON CSF) 1. März 1996 (1996-03-01) * Seite 3, Zeile 16 - Zeile 35 * * Seite 5, Zeile 8 - Zeile 18 * | 1,2,10, 11,16,17 | G01S5/02 H04Q7/38 |
| Y | WO 98 15149 A (NOKIA TELECOMMUNICATIONS OY ;LEPPAENEN RISTO (FI); LAIHO STEFFENS) 9. April 1998 (1998-04-09) * Seite 1, Zeile 3 - Zeile 17 * * Seite 4, Zeile 24 - Seite 6, Zeile 20 * | 1,2,10, 11,16,17 | |
| A | US 5 917 449 A (POPPE MARTIN C ET AL) 29. Juni 1999 (1999-06-29) * Spalte 2, Zeile 32 - Spalte 3, Zeile 34 * * Spalte 4, Zeile 9 - Spalte 5, Zeile 11 * | 1,10,16, 17 | |

**RECHERCHIERTE SACHGEBIETE (Int.Cl.7)**

G01S
H04Q

Der vorliegende Recherchenbericht wurde für alle Patentansprüche erstellt

| Recherchenort | Abschlußdatum der Recherche | Prüfer |
|---|---|---|
| DEN HAAG | 26. Mai 2000 | Haffner, R |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie,übereinstimmendes Dokument

EPO FORM 1503 03.82 (P04C03)

17

## ANHANG ZUM EUROPÄISCHEN RECHERCHENBERICHT
## ÜBER DIE EUROPÄISCHE PATENTANMELDUNG NR.

EP 99 81 1139

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

26-05-2000

| Im Recherchenbericht angeführtes Patentdokument | | Datum der Veröffentlichung | Mitglied(er) der Patentfamilie | | Datum der Veröffentlichung |
|---|---|---|---|---|---|
| FR 2724021 | A | 01-03-1996 | KEINE | | |
| WO 9815149 | A | 09-04-1998 | FI | 963974 A | 04-04-1998 |
| | | | AU | 4462397 A | 24-04-1998 |
| US 5917449 | A | 29-06-1999 | US | 5717406 A | 10-02-1998 |
| | | | AU | 6153196 A | 09-01-1997 |
| | | | CA | 2223537 A | 27-12-1996 |
| | | | EP | 0832440 A | 01-04-1998 |
| | | | WO | 9642020 A | 27-12-1996 |

EPO FORM P0461

Für nähere Einzelheiten zu diesem Anhang : siehe Amtsblatt des Europäischen Patentamts, Nr.12/82